Europäisches Patentamt

European Patent Office

Office européen des brevets

(19)

(11) Publication number: **0 333 104**
**A2**

## EUROPEAN PATENT APPLICATION

(12)

(21) Application number: 89104430.7

(51) Int. Cl.⁴: **G01N 13/00**

(22) Date of filing: 13.03.89

(30) Priority: 17.03.88 IT 1981588

(43) Date of publication of application:
**20.09.89 Bulletin 89/38**

(84) Designated Contracting States:
**AT BE CH DE ES FR GB GR LI LU NL SE**

(71) Applicant: **UNIVERSITA' DEGLI STUDI DI
PAVIA**
**Strada Nuova, 65**
**I-27100 Pavia(IT)**

(72) Inventor: **Conte, Ubaldo**
**Via Treviglio, 6**
**I-21052 Busto Arsizio (Varese)(IT)**
Inventor: **Caramella, Carla**

**Viale Sardegna, 10**
**I-27100 Pavia(IT)**
Inventor: **Gazzaniga, Andrea**
**Via Moroni, 11**
**I-27046 Santa Giulietta (Pavia)(IT)**
Inventor: **Ferrari, Franca**
**Via Vaccari, 7**
**I-27100 Pavia(IT)**
Inventor: **La Manna, Aldo**
**Via Lanfranco, 3**
**I-21700 Pavia(IT)**

(74) Representative: **Gervasi, Gemma**
**NOTARBARTOLO & GERVASI Srl Viale**
**Bianca Maria 33**
**I-20122 Milan(IT)**

(54) **Apparatus for simultaneously determining the quantity of water absorbed by a compacted
substance and the disgregation force developed.**

(57) An apparatus for simultaneously determining both the quantity of water absorbed by a compacted substance
and the disgregation force developed by the absorption of the water by the substance.
Said apparatus consists essentially of:
 a) a hydraulic circuit (8), (9), (10), (14), (15) and (16) for bringing water into contact with the
compacted substance (17);
 b) a micrometric displacement device (5);
 c) a precision balance (11) for determining the quantity of water absorbed by the compacted
substance;
 d) a load cell (3) for measuring the disgregation force of the compacted substance;
 e) a processor system able to record, memorize and process, possibly subsequently, the data
measured under points c) and d).

FIG 1

EP 0 333 104 A2

## APPARATUS FOR SIMULTANEOUSLY DETERMINING THE QUANTITY OF WATER ABSORBED BY A COMPACTED SUBSTANCE AND THE DISGREGATION FORCE DEVELOPED

Prior art

The determination of the quantity of water absorbed by a compacted substance is of great importance in many technological sectors such as the coal and brick industries and to a higher extent in the pharmaceutical technological sector. In this respect, in this latter sector the study of the quantity of water which can be absorbed by tablets, capsules, chewable tablets and other solid pharmaceutical forms is of great importance.

In the case of pharmaceutical forms obtained by compression it is of considerable interest to determine both the quantity of water absorbed by the compacted substance and the rate at which this absorption takes place.

In this respect, the formulations of pharmaceutical tablets include not only the active principle and possible diluents but also disgregating components, the specific purpose of which is to facilitate penetration of the water, with consequent tablet disgregation.

Entry of the aqueous medium into the compacted substance mostly results in swelling of the disgregating substance and an increase in tablet volume. This swelling and the rate at which this phenomenon takes place are in many cases the determining factors for the tablet disgregation. Many attempts have been made to explain the disgregation mechanism and many authors have confronted the problems of determining the quantity of water absorbed by the tablet and the rate at which this absorption takes place. Of these, the Enslin method is of particular application [G.K. Bolhuis. H.V. van Kamp, C.F. Lerk, F.G.M. Sassink, Acta Pharm. Technol., 28, 111 (1982)].

A different approach to the study of the disgregation process has been developed by other authors who have constructed equipment able to determine the disgregation force, ie the force which develops within the tablet when this is brought into contact with an aqueous medium.

However, in both these approaches there is only one measurable parameter, namely the quantity of water absorbed by the compacted substance or the disgregation force which develops.

This means that when the overall disgregation phenomenon is to be studied, the results of the water absorption measurement have to be correlated with the results of the disgregation force measurement. By doing this, the results are not always directly comparable in that each test carried out is a destructive test and it is therefore not possible to measure the two stated parameters on the same tablet.

In addition, while the force measurement must be considered a unidirectional test in which the force is allowed to develop only axially, the water absorption test must be considered a three-dimensional test because the tablet is able to expand in all directions.

Summary of the invention

The aim of the present invention is to provide an apparatus which enables the drawbacks of the known art to be overcome by simultaneously determining on a single sample of compacted substance both the quantity of water absorbed and the force developed by the effect of the water absorption.

Said apparatus consists essentially of:

a) a hydraulic circuit 8, 9, 10, 14, 15 and 16 for bringing water into contact with the compacted substance 17;

b) a micrometric displacement device 5;

c) a precision balance 11 for determining the quantity of water absorbed by the compacted substance;

d) a load cell 3 which enables the disgregation force of the compacted substance to be determined;

e) a processor system able to record, memorize and process, possibly at a subsequent stage, the data measured under points c) and d).

Said apparatus enables an overall evaluation to be made of the effectiveness of the disgregating substances in pharmaceutical preparations by providing information on the relationship between the water absorbed and the disgregation force developed, so making formulation rationalization possible. Thus it is possible to identify the optimum type and quantity of disgregating substance for a desired disgregation rate.

## Detailed description of the invention

Characteristics and advantages of the apparatus according to the present invention are illustrated in the following detailed description of a preferred embodiment of the invention, which is given by way of non-limiting example only.

The purpose of said apparatus is to simultaneously determine the quantity of water absorbed by a compacted substance and the disgregation force developed in the compacted substance as a result of the water absorption.

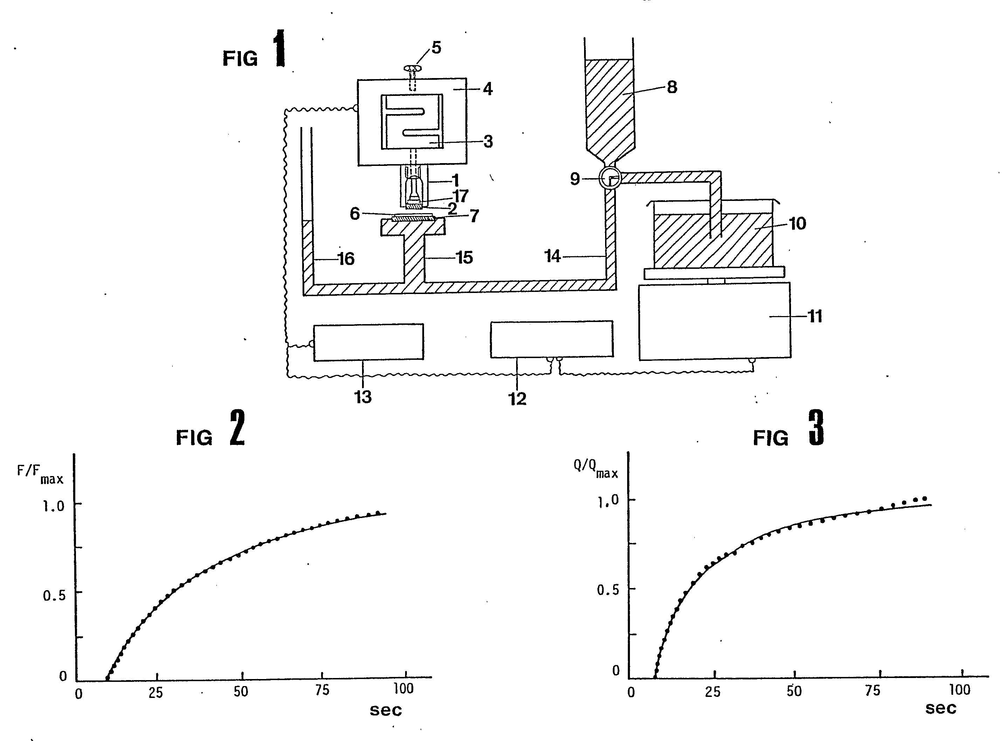

A representation of said apparatus is given in Figure 1 in which the reference numeral 1 is the container for the tablet 17 on which the determination is to be made, 2 is a sintered glass filter, 3 is the load cell for force measurement, 4 is the load cell support, 5 is a micrometric device, 6 is a spongy layer, 7 is a sintered glass filter, 8 is a reserve water container, 9 is a water tap, 10 is a water container, 11 is a microbalance, 12 is a computer and 13 is a recorder.

In particular, the load cell 3 is model 524-10 of DS Europe -Milan, and is connected to the recorder 13 and interfaced with the computer 12. The microbalance is the model Sartorius L 420 P and is interfaced with the computer 12.

The tablet on which the water absorption and disgregation force are to be determined is of cylindrical shape (diameter 11.28 mm, height 2.54 mm) and is previously covered on its lateral surface with adhesive tape resistant to the aqueous medium used, to prevent lateral expansion.

The tablet is positioned in the container 1, which is constructed preferably of plexiglass, and the container is screwed down until perfect contact is obtained between the top of the tablet and the sensitive part of the load cell 3, and between the bottom part and the sintered glass filter 2. An extensiometer load cell or a piezoelectric quartz transducer is preferably used, however a different measurement system can be used instead.

Using the micrometric device 5 it is possible to vertically displace the entire system comprising 1, 2, 3 and 4 to position it in the required position for the determination.

The water flows from the container 10 and through the pipes 14 and 15 to reach the level of the filter 7, through which it passes to the spongy layer 6.

The purpose of the container 8 is to act as a regulator/balancer for the water feed, and when the system is in equilibrium the tap 9 is positioned as shown in the figure, the balance 11 being zeroed when the tap is in this position.

The system comprising 1, 2, 3 and 4 is lowered so that the tablet can absorb water through the system of filters 2 and 7, and so water develops the tablet disgregation force.

The quantity of water absorbed is measured by the precision balance 11 while the load cell 3 simultaneously measures the disgregation force.

A processor suitably interfaced with said precision balance 11 is used to record, memorize and then process the data relative to the quantity of water absorbed.

Likewise, a processor suitably interfaced with the load cell 3 is used to record, memorize and then process the data relative to the disgregation force.

According to a further embodiment, the data relative to the quantity of water absorbed and the disgregation force can be recorded, memorized and then processed by a single processor 12 connected to the two measuring instruments 11 and 3 respectively.

The values of the disgregation force can be measured simultaneously by an XY recorder (type Bryans 29.000) to provide a further control on the system.

By way of non-limiting example, data are given hereinafter relative to measurements made on a standard preparation in the form of model tablets of the following composition:

| | |
|---|---|
| calcium phosphate dihydrate | 465 mg |
| talc | 10 mg |
| carboxymethyl starch | 25 mg |

The tablets were prepared by direct compression in an environment at 20°C and 50% relative humidity, using a press equipped for force measurement and operating at 25.0 + 0.5 kN with an 11.28 mm diameter punch.

The tablets were cylindrical with a diameter of 11,28 mm and a height of 2.54 mm, and weighing 500 mg.

Said tablets were coated on their lateral surface with a water-resistant film and then positioned in the

3

container 1 for the measurements.
The results obtained are given in Table 1.

TABLE 1

| Time (seconds) | Disgregation force (N) | Quantity of water absorbed (mg) |
|---|---|---|
| 1 | 0 | 0 |
| 3 | 0 | 0 |
| 5 | 0 | 0 |
| 7 | 0 | 0 |
| 9 | 0 | 0.013 |
| 11 | 0 | 0.0314 |
| 13 | 0 | 0.0457 |
| 15 | 0.098 | 0.0560 |
| 17 | 1.372 | 0.0686 |
| 19 | 2.744 | 0.0773 |
| 21 | 4.312 | 0.0862 |
| 23 | 5.684 | 0.0911 |
| 25 | 6.958 | 0.0951 |
| 27 | 8.134 | 0.0981 |
| 29 | 9.114 | 0.102 |
| 31 | 9.898 | 0.104 |
| 33 | 10.878 | 0.107 |
| 35 | 11.564 | 0.109 |
| 37 | 12.250 | 0.111 |
| 39 | 12.936 | 0.113 |
| 41 | 13.524 | 0.115 |
| 43 | 14.112 | 0.116 |
| 45 | 14.504 | 0.118 |
| 47 | 14.798 | 0.120 |
| 49 | 15.288 | 0.121 |
| 51 | 15.680 | 0.123 |
| 53 | 16.170 | 0.123 |
| 55 | 16.562 | 0.125 |

| | | |
|---|---|---|
| 57 | 17.052 | 0.126 |
| 59 | 17.346 | 0.128 |
| 61 | 17.738 | 0.129 |
| 63 | 18.130 | 0.130 |
| 65 | 18.424 | 0.131 |
| 67 | 18.718 | 0.132 |
| 69 | 19.012 | 0.134 |
| 71 | 19.306 | 0.135 |
| 73 | 19.698 | 0.136 |
| 75 | 19,894 | 0,137 |
| 77 | 20,188 | 0,139 |
| 79 | 20.384 | 0.140 |
| 81 | 20,580 | 0,141 |
| 83 | 20,874 | 0,142 |
| 85 | 21.070 | 0.144 |
| 87 | 21.266 | 0.144 |
| 89 | 21.462 | 0.145 |
| 91 | 21.568 | 0.147 |
| 93 | 21.756 | 0.147 |
| 95 | 21.952 | 0.147 |
| 97 | 22.050 | 0.147 |
| 99 | 22.246 | 0.147 |

The data of Table 1 were processed using the following expressions:

$F/F_{max}$ and $Q/Q_{max}$

where:

$F/F_{max}$ is the ratio of the force developed at time t to the maximum force developed, and

$Q/Q_{max}$ is the ratio of the quantity of water absorbed at time t to the maximum quantity of water absorbed.

The processed results are shown in Figures 2 and 3 respectively.

**Claims**

1. An apparatus for simultaneously determining both the quantity of water absorbed by a compacted substance and the force developed by the effect of the water absorption, characterised by comprising:

a) a hydraulic circuit (8), (9), (10), (14), (15) and (16) for bringing water into contact with the compacted substance (17);

b) a micrometric displacement device (5);

c) a precision balance (11) for determining the quantity of water absorbed by the compacted substance;

d) a load cell (3) for measuring the disgregation force of the compacted substance;

e) a processor system able to record, memorize and process the data measured under points c) and d).

2. An apparatus as claimed in claim 1, characterised in that said hydraulic circuit comprises a sintered glass filter (7) and a spongy layer (6).

3. An apparatus as claimed in claim 1, characterised in that said load cell (3) consists of an extensiometer cell or a piezoelectric quartz transducer.

4. An apparatus as claimed in claim 1, characterised by comprising a micrometric device (5) by which the entire system consisting of (1) , (2), (3) and (4) can be moved vertically to position it in the required position for the determination.

5. An apparatus as claimed in claim 1, characterised by comprising a processor suitably interfaced with the precision balance (11) and arranged to record, memorize and then process the data relative to the quantity of water absorbed.

6. An apparatus as claimed in claim 1, characterised by comprising a processor suitably interfaced with the load cell (3) and arranged to record, memorize and then process the data relative to the disgregation force.

7. An apparatus as claimed in claim 1, characterised by comprising a single processor (12) connected to the two measurement instruments (11) and (3) respectively, and arranged to record, memorize and then process the data relative to the quantity of water absorbed and to the disgregation force.

8. An apparatus as claimed in claim 1, characterised in that said compacted substance (17) is a pharmaceutical tablet.

9. The use of an apparatus claimed in claims 1 to 8 for the quantitative evaluation of the efficiency of a disgregating substance used in the preparation of pharmaceutical tablets.

**FIG 1**

**FIG 2**

$F/F_{max}$

sec

**FIG 3**

$Q/Q_{max}$

sec